# EUROPEAN PATENT APPLICATION

(11) **EP 3 142 209 A1**
(43) Date of publication of application: **15.03.2017**
(21) Application number: 15789022.9
(22) Date of filing: 27.03.2015
(51) Int. Cl.: H02J 3/38, H02S 10/20

(54) **INVERTER AND PHOTOVOLTAIC POWER GENERATION SYSTEM**

(30) Priority: 08.05.2014 CN 201410193722
(71) Applicant: Sungrow Power Supply Co., Ltd., Hefei, Anhui 230088 (CN)
(72) Inventor: CAO, Wei, Hefei Anhui 230088 (CN); YU, Yong, Hefei Anhui 230088 (CN); LIU, Gaowen, Hefei Anhui 230088 (CN); ZHOU, Xudong, Hefei Anhui 230088 (CN)
(74) Representative: zacco Dr. Peters & Partner
(86) International application number: PCT/CN2015/075196
(87) International publication number: WO 2015/169131

(57) **Abstract**

An inverter (100) and a photovoltaic power generation system. By arranging an energy storage interface (103), redundant direct-current electric energy of electric energy output by a solar panel (200) can be output through the energy storage interface (103) when photovoltaic power generation is limited, and stored direct-current electric energy can be received through the energy storage interface (103) when the photovoltaic power generation is at a low power. Therefore, the electric energy output by the solar panel (200) is not wasted, and the photovoltaic power generation system can generate power at a maximum power without lowering the profits of photovoltaic power generation.

## Description

The present application claims the priority to Chinese Patent Application No. 201410193722.3, titled "INVERTER AND PHOTOVOLTAIC POWER GENERATION SYSTEM" , filed on May 8, 2014 with the State Intellectual Property Office of People's Republic of China, which is incorporated herein by reference in its entirety.

### FIELD

The present disclosure relates to the technical field of photovoltaic power generation, and in particular to an inverter and a photovoltaic power generation system.

### BACKGROUND

In a current photovoltaic power generation system, due to grid capacity limitation or some policy constraints, generation power is limited, that is, the photovoltaic power generation system cannot generate power at a maximum power. In this case, a way of limiting power is used in most of current photovoltaic power generation systems, which results in photovoltaic energy curtailment, and the photovoltaic power generation system cannot generate power at the maximum power, thereby lowering the profits of photovoltaic power generation.

### SUMMARY

In view of this, an inverter and a photovoltaic power generation system are provided in the present disclosure, to solve the problem that the photovoltaic power generation system cannot generate power at a maximum power in the conventional technology.

An inverter applied to a photovoltaic power generation system and connected between a cell panel and an alternating current grid, includes an energy storage interface.

Preferably, the inverter may include a controller configured to send a control signal to the energy storage interface for controlling the energy storage interface to: output redundant direct current electric energy in a case that photovoltaic power generation is limited; and receive and forward the stored direct current electric energy in a case that the photovoltaic power generation is at a low power.

Preferably, the inverter may include a direct current sensor and an inverter bridge. The direct current sensor is connected with an output terminal of the cell panel. The direct current sensor is configured to detect direct current outputted by the cell panel and generate a direct current detection signal based on the direct current. The inverter bridge is connected with the alternating current grid, the direct current sensor and the cell panel. The inverter bridge is configured to receive the direct current detection signal outputted by the direct current sensor and direct voltage outputted by the cell panel, calculate and output total power outputted by the cell panel. The controller is connected with the inverter bridge and is configured to receive the total power transmitted by the inverter bridge, receive information on limitation generation power of the alternating current grid, calculate difference between the total power and the limitation generation power, generate the control signal based on the difference and output the control signal to the energy storage interface. The energy storage interface, based on the control signal, outputs the redundant direct current electric energy of the cell panel in a case that the photovoltaic power generation is limited, and receives and forwards the stored direct current electric energy in a case that the photovoltaic power generation is at a low power. The inverter bridge receives limitation generation direct current electric energy of the cell panel in a case that the photovoltaic power generation is limited and receives the stored direct current electric energy forwarded by the energy storage interface and converts the received direct current electric energy into alternating current electric energy and outputs the alternating current electric energy to the alternating current grid in a case that the photovoltaic power generation is at a low power. And the energy storage interface is arranged between the direct current sensor and the inverter bridge.

Preferably, the inverter may further include a communication unit connected between the alternating current grid and the controller, and the communication unit is configured to receive information on generation power required by the alternating current grid and forward the information on the generation power required by the alternating current grid to the controller.

Preferably, the communication unit may be connected with the alternating current grid via an optical fiber or in a wireless manner.

A photovoltaic power generation system includes any one of the inverters described above and a cell panel.

Preferably, the photovoltaic power generation system may further include: an energy storage device connected with the energy storage interface and a controller. The energy storage device is configured to: receive a control signal, store redundant direct current electric energy outputted by the cell panel in a case that photovoltaic power generation is limited; and output the stored direct current electric energy in a case that the photovoltaic power generation is at a low power.

Preferably, the energy storage device may include a storage battery and a bidirectional DCDC controller. The bidirectional DCDC controller is connected between the storage battery and the energy storage interface and is connected with the controller. The bidirectional DCDC controller is configured to receive the control signal and control the storage battery to store redundant direct current electric energy outputted by the cell panel in a case that photovoltaic power generation is limited and output the stored direct current electric energy in a case that the photovoltaic power generation is at a low power.

Preferably, the inverter may further include a communication unit connected between the alternating current grid and the controller, and the communication unit is configured to receive information on limitation generation power of the alternating current grid and forward the information on the limitation generation power of the alternating current grid to the controller.

Preferably, the communication unit may be connected with the alternating current grid via an optical fiber or in a wireless manner.

Preferably, the inverter may further include a voltage and current detection circuit connected between an inverter bridge and the energy storage interface, and the voltage and current detection circuit is configured to detect direct current and direct voltage inputted to the inverter bridge and output a detection signal to the inverter bridge. And the inverter calculates and outputs limitation generation power of the alternating current grid and transmits the limitation generation power of the alternating current grid to the controller.

As can be seen from the above-described technical solution, in the inverter according to the present disclosure, an energy storage interface is arranged, redundant direct current electric energy of electric energy outputted by a cell panel can be outputted via the energy storage interface in a case that photovoltaic power generation is limited, and the stored direct current electric energy can be received via the energy storage interface in a case that the photovoltaic power generation is at a low power. Therefore, the electric energy outputted by the cell panel is not wasted, and the photovoltaic power generation system can generate power at a maximum power without lowering the profits of photovoltaic power generation.

### BRIEF DESCRIPTION OF THE DRAWINGS

Figure 1 is a schematic structural diagram of a photovoltaic power generation system according to an embodiment of the present disclosure;
Figure 2 is a schematic diagram of a relationship between output electric energy and limitation generation electric energy of a photovoltaic power generation system according to an embodiment of the present disclosure;
Figure 3 is a schematic structural diagram of a photovoltaic power generation system according to another embodiment of the present disclosure;
Figure 4 is a schematic structural diagram of a photovoltaic power generation system according to another embodiment of the present disclosure;
Figure 5 is a schematic structural diagram of a photovoltaic power generation system according to another embodiment of the present disclosure;
Figure 6 is a schematic structural diagram of a photovoltaic power generation system according to another embodiment of the present disclosure; and
Figure 7 is a schematic structural diagram of a photovoltaic power generation system according to another embodiment of the present disclosure.

### DETAILED DESCRIPTION

For further understanding the present disclosure, preferred solutions of the present disclosure is described hereinafter in conjunction of embodiments, however it should be understood that these descriptions are only for further illustrating the features and advantages of the present disclosure, and should not be interpreted as limiting the claims of the present disclosure.

An inverter applied to a photovoltaic power generation system is provided in the present disclosure, to solve a problem in the conventional technology that the photovoltaic power generation system cannot generate power at a maximum power.

Specifically, the inverter includes an energy storage interface.

A specific operating principle is as follows. By arranging the energy storage interface, redundant direct current electric energy of electric energy outputted by a cell panel can be outputted via the energy storage interface in a case that photovoltaic power generation is limited, and the stored direct current electric energy can be received via the energy storage interface in a case that the photovoltaic power generation is at a low power. Therefore, the electric energy outputted by the cell panel is not wasted.

With the inverter according to the embodiment, the photovoltaic power generation system can generate power at a maximum power without lowering the profits of photovoltaic power generation.

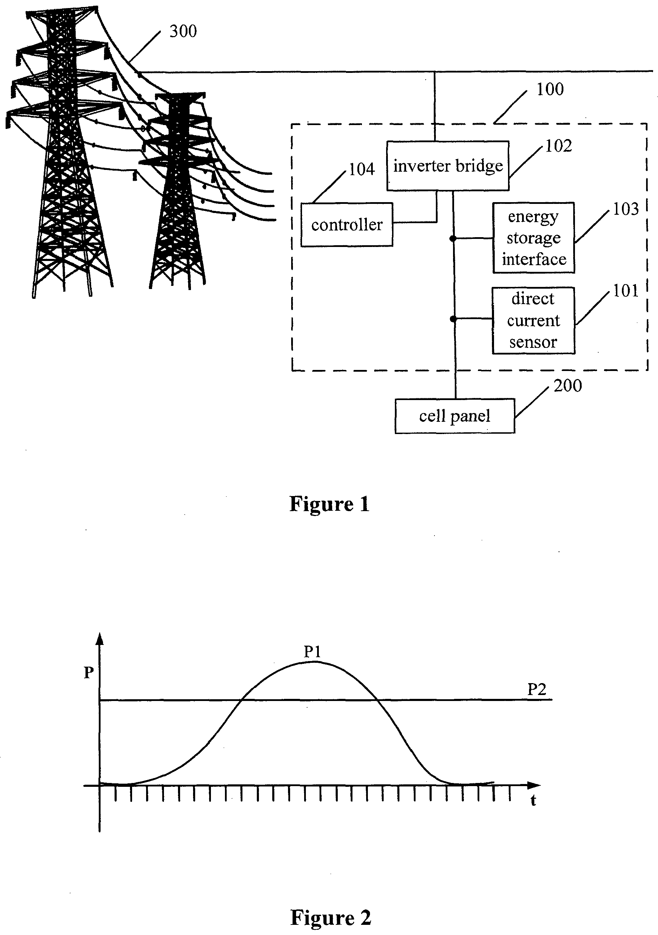

Preferably, as shown in Figure 1, an inverter 100 is connected between a cell panel 200 and an alternating current grid 300. The inverter 100 includes: a direct current sensor 101 connected with an output terminal of the cell panel 200; an inverter bridge 102 connected with the direct current sensor 101 and the cell panel 200; an energy storage interface 103 arranged between the direct current sensor 101 and the inverter bridge 102; and a controller 104 connected with the inverter bridge 102.

A specific operating principle is as follows. The direct current sensor 101 detects direct current outputted by the cell panel 200. The inverter bridge 102 receives a direct current detection signal outputted by the direct current sensor 101 and direct voltage outputted by the cell panel 200, calculates and outputs total power P1 outputted by the cell panel 200, so that the inverter bridge 102 preserves a function of tracking and controlling at a maximum power point. The controller 104 receives the total power P1 outputted by the cell panel 200 and information on limitation generation power P2 of the alternating current grid 300, and calculates difference between the total power P1 and the limitation generation power P2, thereby which state the photovoltaic power generation system is in at this moment can be known, as shown in Figure 2. Then the controller 104 outputs a control signal, so that the energy storage interface 103 outputs redundant direct current electric energy of the cell panel 200 in a case that photovoltaic power generation is limited, receives and forwards the stored direct current electric energy in a case that the photovoltaic power generation is at a low power. The inverter bridge 102 receives limitation generation direct current electric energy of the cell panel 200 in a case that the photovoltaic power generation is limited, and receives the stored direct current electric energy forwarded by the energy storage interface 103 and converts the received direct current electric energy into alternating current electric energy and outputs the alternating current electric energy to the alternating current grid 300 in a case that the photovoltaic power generation is at a low power.

With the inverter 100 according to the embodiment, by the above-described process, the redundant direct current electric energy of electric energy outputted by the cell panel 200 can be outputted via the energy storage interface 103 in a case that the photovoltaic power generation is limited, and the inverter 102 can receive the stored direct current electric energy forwarded by the energy storage interface 103 in a case that the photovoltaic power generation is at a low power. Therefore, the electric energy outputted by the cell panel 200 is not wasted, and the photovoltaic power generation system can generate power at a maximum power without lowering the profits of photovoltaic power generation. In addition, the energy storage interface 103 is arranged between the direct current sensor 101 and the inverter bridge 102, so that the inverter bridge 102 can preserve the function of tracking and controlling at a maximum power point without changing a control algorithm of the inverter bridge 102.

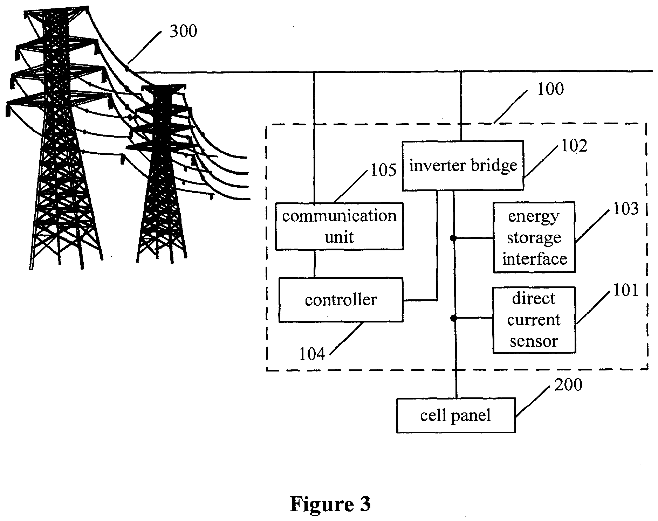

Preferably, as shown in Figure 3, the inverter 100 further includes a communication unit 105 connected with the alternating current grid 300 and the controller 104.

The communication unit 105 is configured to receive information on limitation generation power of the alternating current grid 300 and forward the information on limitation generation power of the alternating current grid 300 to the controller 104.

Preferably, the communication unit 105 is connected with the alternating current grid 300 via an optical fiber or in a wireless manner.

In practice, a communication manner between the communication unit 105 and the alternating current grid 300 may be a wired manner using an optical fiber or the like, or may be a wireless manner, which is dependent on a specific application scenario and is not limited here.

A photovoltaic power generation system is further provided according to another embodiment of the present disclosure, as shown in Figure 1, the photovoltaic power generation system includes a cell panel 200, and an inverter 100 connected between the cell panel 200 and the alternating current grid 300. The inverter 100 includes: a direct current sensor 101 connected with an output terminal of the cell panel 200; an inverter bridge 102 connected with the direct current sensor 101 and the cell panel 200; an energy storage interface 103 arranged between the direct current sensor 101 and the inverter bridge 102; and a controller 104 connected with the inverter bridge 102.

A specific operating principle is the same as that described in the above embodiment, which is not repeated here.

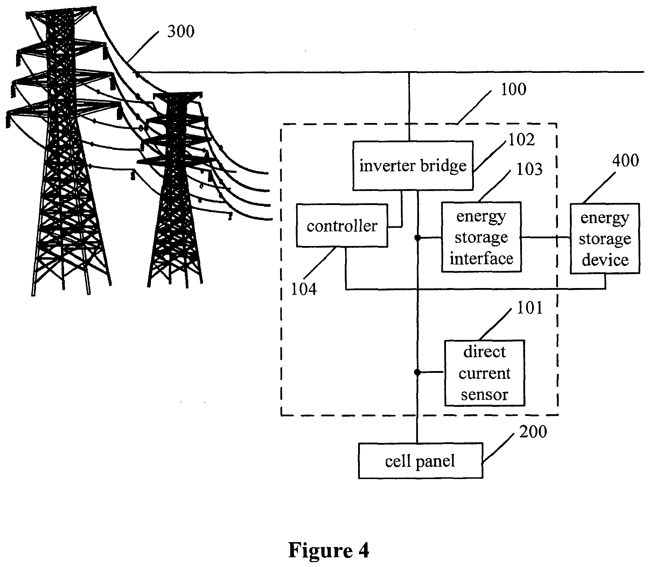

Preferably, as shown in Figure 4, the photovoltaic power generation system further includes an energy storage device 400 connected with the energy storage interface 103 and the controller 104.

The energy storage device 400 is configured to receive the control signal, and under control of the controller 104, receive redundant direct current electric energy outputted by the cell panel 200 in a case that photovoltaic power generation is limited and output the stored direct current electric energy in a case that the photovoltaic power generation is at a low power.

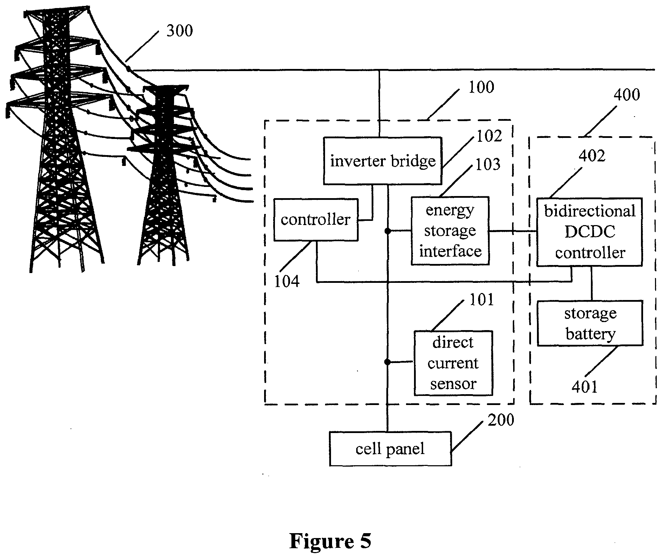

Preferably, as shown in Figure 5, the energy storage device 400 includes: a storage battery 401; and a bidirectional DCDC controller 402 connected between the storage battery 401 and the energy storage interface 103 and connected with the controller 104.

The bidirectional DCDC controller 402 is configured to receive the control signal and control the storage battery 401 to store redundant direct current electric energy outputted by the cell panel 200 in a case that the photovoltaic power generation is limited and output the stored direct current electric energy in a case that the photovoltaic power generation is at a low power.

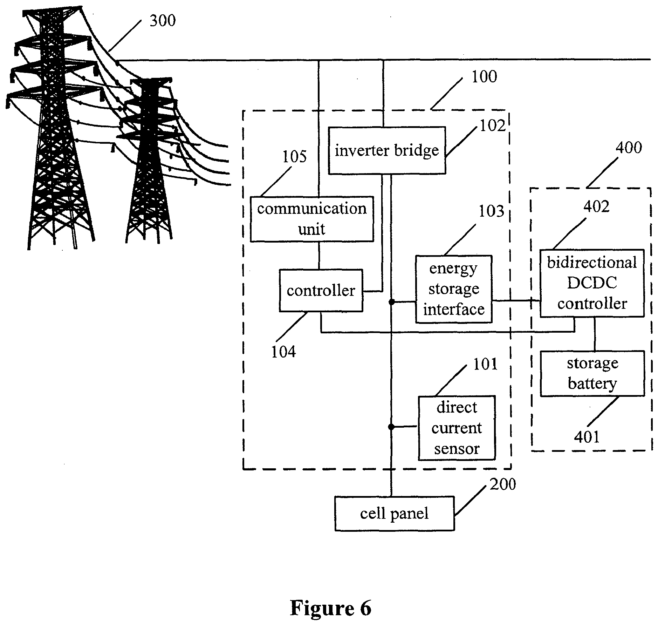

Preferably, as shown in Figure 6, the inverter 100 further includes a communication unit 105 connected with the alternating current grid 300 and the controller 104.

The communication unit 105 is configured to receive information on limitation generation power of the alternating current grid 300 and forward the information on the limitation generation power of the alternating current grid 300 to the controller 104.

Preferably, the communication unit 105 may be connected with the alternating current grid 300 via an optical fiber or in a wireless manner.

In practice, a communication manner between the communication unit 105 and the alternating current grid 300 may be a wired manner using an optical fiber or the like, or may be a wireless manner, which is dependent on a specific application scenario and is not limited here.

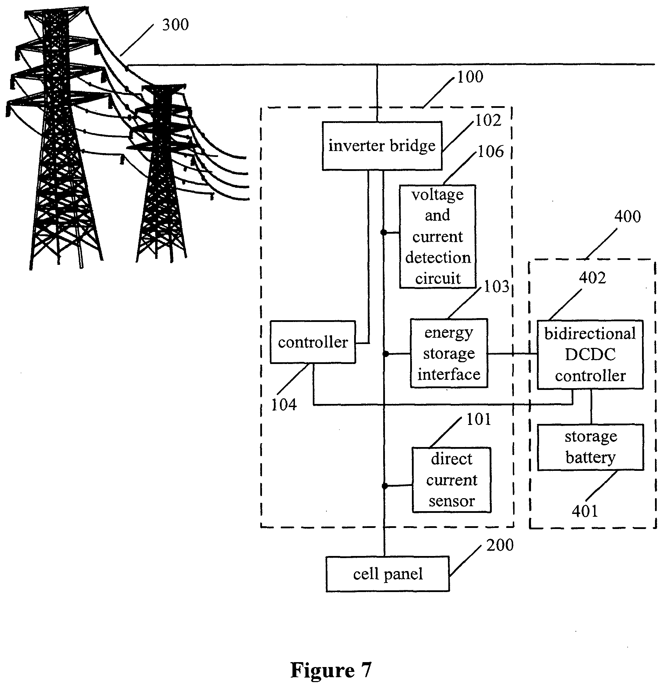

Alternatively, as shown in Figure 7, the inverter 100 further includes a voltage and current detection circuit 106 connected between the inverter bridge 102 and the energy storage interface 103.

The voltage and current detection circuit 106 is configured to detect direct current and direct voltage inputted to the inverter bridge 102 and output a detection signal to the inverter bridge 102, and the inverter 102 calculates and outputs the limitation generation power of the alternating current grid 300 and transmits the limitation generation power of the alternating current grid 300 to the controller 104. Then the controller 104 calculates difference between the limitation generation power and the total power outputted by the cell panel 200, and controls an operating state of the energy storage device 400 based on the difference.

In practice, the inverter 100 may obtain the information on the limitation generation power of the alternating current grid 300 by the communication unit 105, as shown in Figure 6. Alternatively the inverter 100 may obtain the information on the limitation generation power of the alternating current grid 300 by detection of the voltage and current detection circuit 106 and calculation of the inverter bridge 102, as shown in Figure 7. Specific implementing forms for obtaining the limitation generation power of the alternating current grid 300 may be various, which are not limited here, and can be selected according to actual conditions.

The embodiments of the present disclosure are described herein in a progressive manner, with an emphasis placed on explaining the difference between each embodiment and the other embodiments. The same or similar parts among the embodiments can be referred to each other.

The above description of the embodiments herein enables those skilled in the art to implement or use the present disclosure. Numerous modifications to the embodiments are apparent to those skilled in the art, and the general principles defined herein can be implemented in other embodiments without deviating from the spirit or scope of the present disclosure. Therefore, the present disclosure is not limited to the embodiments described herein, but is to conform to the widest scope consistent with the principles and novel features disclosed herein.

## Claims

1. An inverter applied to a photovoltaic power generation system and connected between a cell panel and an alternating current grid, comprising an energy storage interface.

2. The inverter according to claim 1, further comprising a controller configured to send a control signal to the energy storage interface for controlling the energy storage interface to:
output redundant direct current electric energy in a case that photovoltaic power generation is limited; and receive and forward stored direct current electric energy in a case that the photovoltaic power generation is at a low power.

3. The inverter according to claim 2, further comprising:
a direct current sensor connected with an output terminal of the cell panel, wherein the direct current sensor is configured to detect direct current outputted by the cell panel and generate a direct current detection signal based on the direct current; and
an inverter bridge connected with the alternating current grid, the direct current sensor and the cell panel, wherein the inverter bridge is configured to receive the direct current detection signal outputted by the direct current sensor and direct voltage outputted by the cell panel, calculate and output total power outputted by the cell panel, wherein
the controller is connected with the inverter bridge and is configured to receive the total power transmitted by the inverter bridge, receive information on limitation generation power of the alternating current grid, calculate difference between the total power and the limitation generation power, generate the control signal based on the difference and output the control signal to the energy storage interface, and the energy storage interface, based on the control signal, outputs the redundant direct current electric energy of the cell panel in a case that the photovoltaic power generation is limited, and receives and forwards the stored direct current electric energy in a case that the photovoltaic power generation is at a low power, and the inverter bridge receives limitation generation direct current electric energy of the cell panel in a case that the photovoltaic power generation is limited and receives the stored direct current electric energy forwarded by the energy storage interface and converts the received direct current electric energy into alternating current electric energy and outputs the alternating current electric energy to the alternating current grid in a case that the photovoltaic power generation is at a low power, and
the energy storage interface is arranged between the direct current sensor and the inverter bridge.

4. The inverter according to claim 3, further comprising a communication unit connected between the alternating current grid and the controller, wherein the communication unit is configured to receive information on generation power required by the alternating current grid and forward the information on the generation power required by the alternating current grid to the controller.

5. The inverter according to claim 4, wherein the communication unit is connected with the alternating current grid via an optical fiber or in a wireless manner.

6. A photovoltaic power generation system, comprising the inverter according to any one of claims 1 to 5 and a cell panel.

7. The photovoltaic power generation system according to claim 6, further comprising:
an energy storage device connected with the energy storage interface and a controller, wherein the energy storage device is configured to: receive a control signal, store redundant direct current electric energy outputted by the cell panel in a case that photovoltaic power generation is limited; and output the stored direct current electric energy in a case that the photovoltaic power generation is at a low power.

8. The photovoltaic power generation system according to claim 6, wherein an energy storage device comprises:
a storage battery; and
a bidirectional DCDC controller connected between the storage battery and the energy storage interface and connected with a controller, wherein the bidirectional DCDC controller is configured to receive a control signal and control the storage battery to store redundant direct current electric energy outputted by the cell panel in a case that photovoltaic power generation is limited and output the stored direct current electric energy in a case that the photovoltaic power generation is at a low power.

9. The photovoltaic power generation system according to claim 7, wherein the inverter further comprises a communication unit connected between the alternating current grid and the controller, and the communication unit is configured to receive information on limitation generation power of the alternating current grid and forward the information on the limitation generation power of the alternating current grid to the controller.

10. The photovoltaic power generation system according to claim 9, wherein the communication unit is connected with the alternating current grid via an optical fiber or in a wireless manner.

11. The photovoltaic power generation system according to claim 7, wherein the inverter further comprises a voltage and current detection circuit connected between an inverter bridge and the energy storage interface, and the voltage and current detection circuit is configured to detect direct current and direct voltage inputted to the inverter bridge and output a detection signal to the inverter bridge, and the inverter calculates and outputs limitation generation power of the alternating current grid and transmits the limitation generation power of the alternating current grid to the controller.
